# EUROPÄISCHE PATENTSCHRIFT

(11) **EP 1 007 600 B1**
(45) Veröffentlichungstag und Bekanntmachung des Hinweises auf die Patenterteilung: **13.06.2001**
(21) Anmeldenummer: 98945154.7
(22) Anmeldetag: 06.08.1998
(51) Int. Cl.: C09K 5/00

(54) **NIEDRIGVISKOSE KÜHLSOLEN MIT VERBESSERTEM KORROSIONSSCHUTZ**
LOW-VISCOSITY REFRIGERATING BRINES WITH IMPROVED CORROSION CONTROL
SOLS REFRIGERANTS DE FAIBLE VISCOSITE A PROPRIETES ANTICORROSION AMELIOREES

(30) Priorität: 18.08.1997 DE 19735717
(43) Veröffentlichungstag der Anmeldung: 14.06.2000
(73) Patentinhaber: Clariant GmbH, 65929 Frankfurt am Main (DE)
(72) Erfinder: MINKS, Peter, D-84503 Altötting (DE); SCHUSTER, Johann, D-84556 Kastl (DE)
(86) Internationale Anmeldenummer: EP9804898
(87) Internationale Veröffentlichungsnummer: WO9909108

(56) Entgegenhaltungen:
- EP-A- 0 306 972
- EP-A- 0 677 563
- WO-A-96/26990
- DE-A- 4 107 442
- DATABASE WPI Section Ch, Week 9412 Derwent Publications Ltd., London, GB; Class E19, AN 94-098047 XP002086519 & JP 06 049442 A (CCI KK) , 22. Februar 1994

## Beschreibung

Kühlsolen auf Basis wäßriger Lösungen organischer Salze haben eine deutlich niedrigere Viskosität als Solen auf Basis von Ethylenglykol oder Propylenglykol, insbesondere bei tiefen Temperaturen im Bereich von' -20 bis -40 °C. Ein weiterer Vorteil ist ihre physiologische Unbedenklichkeit, so daß sie bevorzugt im Lebensmittelsektor zur indirekten Kühlung (zum Beispiel Gefriertrocknung, Tiefkühlmöbel) eingesetzt werden. Ein hoher Wasseranteil von über 40 Gew.-% macht die Solen unbrennbar. Durch die niedrige Viskosität sind erhebliche Energieeinsparungen beim Umpumpen erzielbar. Durch den hohen Wasseranteil werden außerdem vorteilhafte wärme- und kältetechnische Eigenschaften erzielt, zum Beispiel eine hohe spezifische Wärme und eine hohe Wärmeübergangszahl.

In DE-A-44 12 954 (EP-A-0 677 563) werden wäßrige Kaliumformiatlösungen als Kälteträger vorgeschlagen, die bis zu 55 Gew.-% des Formiats enthalten und bis -55 °C verwendbar sind. Diese Solen enthalten als Inhibitor 1,2,4-Triazol und/oder Borax. In Abwesenheit von Borax wird zur Kontrolle des pH-Wertes ein pH-Indikator, vorzugsweise Phenolphthalein, zugesetzt. In DE-A-41 07 442 werden funktionelle Flüssigkeiten als Wärme- und Kälteträger beschrieben, welche im wesentlichen Kaliumacetat und Kaliumcarbonat als wäßrige Lösung enthalten und die mit geringen Mengen an Kaliumfluorid, Alkalisalzen von Kieselsäuren und bekannten Inhibitoren, zum Beispiel Benztriazol, korrosionsinhibiert sind.

Ein großes Problem der genannten Kühlflüssigkeiten ist die durch Sauerstoff verursachte Korrosion metallischer Werkstoffe, insbesondere die Korrosion von Eisenmetallen (Eisen, Nickel, Kobalt). Selbst wenn das Kühlsystem sorgfältig mit Stickstoff gespült wird, ist es in der Praxis kaum zu vermeiden, daß auf längere Sicht wieder Luft eindringt. Die üblichen Inhibitoren aus der Gruppe der Silicate, Phosphate und aromatischen Triazole sind auf Dauer nicht wirksam genug, um Bauteile aus Eisenmetallen, insbesondere aus Stahl oder Grauguß, zu schützen Während konzentrierte, wäßrige Lösungen mit einem Gehalt von mehr als 40 Gew.-% an Kaliumformiat oder Kaliumacetat, welche die genannten Inhibitoren enthalten, in der Regel wenig korrosiv wirken, gilt dies nicht für verdünnte Lösungen. Bei zunehmender Verdünnung mit Wasser entstehen durch Hydrolyse Ameisensäure aus Formiaten und Essigsäure aus Acetaten, was schließlich zu einem Abfall des pH-Wertes und einem Anstieg der Korrosionsrate führt.

Die vorliegende Erfindung betrifft wäßrige, niedrigviskose Kühlsolen, die Metallsalze kurzkettiger Carbonsäuren enthalten, wobei Kaliumformiat und/oder Kaliumacetat bevorzugt sind. Der Salzgehalt liegt in der Regel zwischen 20 und 60 Gew.-%, je nach gewünschter Frostsicherheit. Aufgabe der Erfindung war es, einen Kälteträger zu finden, der auch in wäßriger Verdünnung in einem Frostsicherheitsbereich von -10 bis -40 °C einen guten Korrosionsschutz aufweist. Ein weiteres Ziel war, dem Anwender durch einfaches Mischen eines Konzentrates mit hoher Frostsicherheit und Wasser die Zubereitung einer gebrauchsfertigen Kühlsole gemäß seinen Frostschutzvorgaben zu ermöglichen. Es soll damit auch vermieden werden, daß der Anwender für jede Einstellung auf eine bestimmte Frostsicherheit einen speziell abgestimmten Inhibitorensatz zugeben muß. Die dem Konzentrat zugegebenen Inhibitoren sollen selbst eine frostschützende Wirkung aufweisen, ohne die Viskosität wesentlich zu erhöhen. Dies wird erfindungsgemäß dadurch erreicht, daß man dem Kälteträger auf Basis von Kaliumformiat und/oder -acetat eine wirksame Menge eines Sulfits beimischt, wobei überraschend gefunden wurde, daß sich die zugesetzten Sulfite in einer Menge von 0,2 bis 5, vorzugsweise 0,5 bis 3, insbesondere 1,5 bis 2,5 Gew.-% selbst bei -40 °C noch vollständig lösen. innerhalb der Gruppe der Sulfite werden Alkalimetallsulfite bevorzugt, insbesondere Natrium- und Kaliumsulfit. Es können jedoch auch saure Sulfite (Bisulfite, Pyrosulfite) eingesetzt werden, die in der Regel besser löslich sind als die normalen Sulfite. Als zusätzliche Schutzmaßnahme ist es empfehlenswert, den geschlossenen Kühlmittelkreislauf mit Stickstoff zu inertisieren, um eine Oxidation des Sulfits oder Hydrogensulfits zu vermeiden.

Zusätzlich werden den erfindungsgemäßen Kühlsolen alkalische Stoffe wie zum Beispiel Kaliumcarbonat, Natriumcarbonat, Kali- und/oder Natronlauge, Kaliumphosphate und Borax zum Anheben des pH-Wertes zugegeben, um auch bei der Verdünnung der oben genannten Konzentrate noch eine genügende Reservealkalität zu garantieren. Die erforderlichen Zusatzmengen liegen zwischen 0,3 und 5 Gew.-%. Weiterhin werden bekannte Buntmetallinhibitoren für Kupfer, Rotguß und Messing aus der Gruppe der Triazole, Imidazole, Benzotriazole (bevorzugt 1,2,4-Benzotriazol, 1 H-Benzotriazol) und der Mercaptobenzthiazole in Mengen von 0,02 bis 0,2 Gew.-% eingesetzt. Zur Verbesserung des Korrosionschutzes an Aluminiumwerkstoffen können Silicate, beispielsweise Natriummetasilicat, Wasserglas, Kaliumsilicate in einer Menge von bis zu 0,3 Gew.-% verwendet.

Zur Prüfung des Korrosionsverhaltens wird die in der Technik weit verbreitete Untersuchung gemäß ASTM D 1384-94 angewandt, die unter Luftsauerstoffdurchleitung (6 I Luft/h) bei einer Temperatur von 88 °C über einen Zeitraum von 336 h durchgeführt wird. Dies simuliert nicht nur den unvermeidlichen Luftzutritt in die Kühlsole, sondern auch das Verhalten bei höheren Temperaturen. Bekanntlich müssen kältetechnische Anlagen in regelmäßigen Abständen abgetaut werden, was durch eine sogenannte Warmsole, das heißt mit einer Sole einer Temperatur von + 50 bis + 80 °C bewerkstelligt werden kann.

Folgende Beispiele zeigen die Zusammensetzung und das Korrosionsverhalten im obigen ASTM-Test unverdünnt und in Verdünnung mit entsalztem Wasser. Zum Vergleich sind die Korrosionswerte ohne den erfindungsgemäßen Zusatz von Sulfiten aufgeführt (Vergleichsbeispiele 1 bis 4). Prozentangaben beziehen sich - falls nicht anders angegeben - auf Gewichtsprozente. Die Differenz zu 100 Gew.-% ist jeweils entmineralisiertes Wasser.

| Beispiel 1 | |
|---|---|
| 46 % | Kaliumacetat |
| 3 % | Kaliumcarbonat |
| 1 % | Natriumsulfit |
| 0,05 % | Kaliumphosphat |
| 0,1 % | 1H-Tolyltriazol |
| 0,05 % | 1 H-Benzotriazol |

| Vergleichsbeispiel 1 (Stand der Technik) | |
|---|---|
| 46 % | Kaliumacetat |
| 3 % | Kaliumcarbonat |
| 0,05 % | Kaliumphosphat |
| 0,1 % | 1H-Tolyltriazol |
| 0,05 % | 1H-Benzotriazol |

| Korrosionswerte nach ASTM D 1384-94 (Abtrag in g/m²) | | | | |
|---|---|---|---|---|
| | Beispiel 1 | | Vergleichsbeispiel 1 | |
| Metall | unverdünnt | 1:1 verdünnt | unverdünnt | 1:1 verdünnt |
| Kupfer | -1,0 | -1,3 | -1,4 | - 1,2 |
| Messing | -2,3 | -2,0 | -3,0 | - 1,8 |
| Stahl | -2,7 | -4,3 | -5,3 | -110,8 |
| Gußeisen | -1,1 | -1,7 | -2,2 | - 18,3 |

| Beispiel 2 | |
|---|---|
| 45 % | Kaliumformiat |
| 2 % | Kaliumhydroxid |
| 2 % | Natriummetabisulfit |
| 0,1 % | 1 H-Benzotriazol |

| Vergleichsbeispiel 2 | |
|---|---|
| 45 % | Kaliumformiat |
| 2 % | Kaliumhydroxid |
| 0,1 % | 1H-Benzotriazol |

| Korrosionswerte nach ASTM D 1384-94 (Abtrag in g/m²) | | | | |
|---|---|---|---|---|
| | Beispiel 2 | | Vergleichsbeispiel 2 | |
| Metall | unverdünnt | 1:1 verdünnt | unverdünnt | 1:1 verdünnt |
| Kupfer | -0,9 | -1,6 | - 6,1 | -25,0 |
| Messing | -2,2 | -2,7 | -33,2 | -42,0 |
| Stahl | -1,2 | -1,2 | - 6,9 | - 1,0 |
| Gußeisen | -1,3 | -1,9 | -11,2 | -42,6 |

| Beispiel 3 | |
|---|---|
| 46 % | Kaliumformiat |
| 3 % | Kaliumcarbonat |
| 1,5 % | Natriumsulfit |
| 0,05 % | Natriumsilicat |
| 0,05 % | 1H-Benzotriazol |

| Vergleichsbeispiel 3 | |
|---|---|
| 46 % | Kaliumformiat |
| 3 % | Kaliumcarbonat |
| 0,05 % | Natriumsilicat |
| 0,05 % | Natriumsilicat |

| Korrosionswerte nach ASTM D 1384-94 (Abtrag in g/m²) | | | | |
|---|---|---|---|---|
| | Beispiel 3 | | Vergleichsbeispiel 3 | |
| Metall | unverdünnt | 1:1 verdünnt | unverdünnt | 1:1 verdünnt |
| Kupfer | -0,3 | -6,3 | -11,3 | -15,0 |
| Messing | - 0,6 | -5,5 | - 4,5 | - 6,5 |
| Stahl | +0,01 | -1,8 | - 8,3 | - 1,1 |
| Gußeisen - | 0,03 | -8,5 | -15,0 | -94,6 |

| Beispiel 4 | |
|---|---|
| 46 % | Kaliumformiat |
| 2 % | Kaliumcarbonat |
| 0,5 % | Borax |
| 2 % | Natriumsulfit |
| 0,05 % | 1 H-Benzotriazol |
| 0,05 % | Natriummetasilicat |

| Vergleichsbeispiel 4 | |
|---|---|
| 46 % | Kaliumformiat |
| 2 % | Kaliumcarbonat |
| 0,5 % | Borax |
| 0,05 % | 1H-Benzotriazol |
| 0,05 % | Natriummetasilicat |

| Korrosionswerte nach ASTM D 1384-94 (Abtrag in g/m²) | | | | |
|---|---|---|---|---|
| | Beispiel 4 | | Vergleichsbeispiel 4 | |
| Metall | unverdünnt | 1:1 verdünnt | unverdünnt | 1:1 verdünnt |
| Kupfer | -0,9 | -2,2 | - 5,2 | - 7,5 |
| Messing | -2,4 | -5,9 | - 7,5 | - 9,6 |
| Stahl | -1,6 | -0,4 | - 0,9 | - 4,1 |
| Gußeisen | -5,4 | -6,2 | -33,5 | -53,8 |

Die Versuche zeigen eine deutliche Verbesserung des Korrosionsverhaltens mit den erfindungsgemäßen Zusätzen von Sulfiten, besonders auf Stahl und Gußeisen, aber auch auf Buntmetallen. Die Frostsicherheit und die Viskosität der entsprechenden Mischungen ist aus folgendem Kenndatenvergleich ersichtlich:

| Kennzahl | reines Kaliumformiat 50 Gew.-% ohne Inhibitoren | erfindungsgemäße Sole nach Beispiel 4 |
|---|---|---|
| Frostsicherheit | -53 °C | -53 °C |
| Viskosität bei -40 °C | 18 mm²/s | 24 mm²/s |
| Temperaturstabilität | | |
| -40 °C | > 7 Tage | > 7 Tage |
| +60 °C | > 7 Tage | > 7 Tage |

Die zugesetzte Inhibitorenkombination ist in einem Temperaturbereich von -40 bis +80 °C stabil, das heißt ohne Abscheidungen beziehungsweise Kristallbildungen.

## Patentansprüche

1. Kühlsolen auf Basis von 20 bis 60 Gew.-% inhibierter Alkalimetallacetate und/oder -formiate mit verbessertem Korrosionsschutz, dadurch gekennzeichnet, daß die Kühlsolen 0,2 bis 5 Gew.-% Alkalisalze der schwefeligen Säure enthalten.

2. Kühlsolen nach Anspruch 1, dadurch gekennzeichnet, daß sie zusätzlich alkalische Verbindungen, Buntmetallinhibitoren oder Silicate enthalten.

3. Kühlsole nach Anspruch 1, dadurch gekennzeichnet, daß sie zusätzlich Alkalicarbonate, Alkalihydroxide, Alkaliphosphate oder Alkalicarbonate enthalten.

4. Kühlsolen nach Anspruch 1, dadurch gekennzeichnet, daß sie zusätzlich Triazole, Imidazole, Benztriazole oder Mercaptobenzthiazole enthalten.

5. Kühlsolen nach Anspruch 1, dadurch gekennzeichnet, daß sie zusätzlich Silikate enthalten.

6. Kühlsolen nach Anspruch 1, dadurch gekennzeichnet, daß sie 0,5 bis 3 Gew.-% einer alkalischen Verbindung enthalten.

7. Kühlsolen nach Anspruch 1, dadurch gekennzeichnet, daß sie 0,02 bis 0,2 Gew.-% Buntmetallinhibitoren enthalten.

8. Kühlsolen nach Anspruch 1, dadurch gekennzeichnet, daß sie bis zu 0,3 Gew.-% Silikate enthalten.

9. Kühlsolen nach Anspruch 1, dadurch gekennzeichnet, daß sie 0,5 bis 3 Gew.- % Alkalisalze der schwefeligen Säure enthalten.

10. Kühlsolen nach Anspruch 9, dadurch gekennzeichnet, daß sie 1 bis 2,5 Gew.-% Alkalisalze der schwefeligen Säure enthalten

11. Kühlsolen nach Anspruch 6, dadurch gekennzeichnet, daß sie 2 bis 3 Gew.-% einer alkalischen Verbindung enthalten

12. Kühlsolen nach Anspruch 7, dadurch gekennzeichnet, daß sie 0,03 bis 0,1 Gew.-% Buntmetallinhibitoren enthalten.

13. Kühlsolen nach Anspruch 8, dadurch gekennzeichnet, daß sie 0,03 bis 0,1 Gew.-%'Silikate enthalten.

## Claims

1. A coolant brine based on 20 to 60% by weight of inhibited alkali metal acetates and/or formates having improved corrosion protection, wherein the coolant brines contain 0.2 to 5% by weight of alkali metal salts of sulfurous acid.

2. A coolant brine as claimed in claim 1, which additionally contains alkaline compounds, nonferrous metal inhibitors or silicates.

3. A coolant brine as claimed in claim 1, which additionally contains alkali metal carbonates, alkali metal hydroxides, alkali metal phosphates or alkali metal carbonates.

4. A coolant brine as claimed in claim 1, which additionally contains triazoles, imidazoles, benzotriazoles or mercaptobenzothiazoles.

5. A coolant brine as claimed in claim 1, which additionally contains silicates.

6. A coolant brine as claimed in claim 1, which contains 0.5 to 3% by weight of an alkaline compound.

7. A coolant brine as claimed in claim 1, which contains 0.02 to 0.2% by weight of nonferrous metal inhibitors.

8. A coolant brine as claimed in claim 1, which contains up to 0.3% by weight of silicates.

9. A coolant brine as claimed in claim 1, which contains 0.5 to 3% by weight of alkali metal salts of sulfurous acid.

10. A coolant brine as claimed in claim 9, which contains 1 to 2.5% by weight of alkali metal salts of sulfurous acid.

11. A coolant brine as claimed in claim 6, which contains 2 to 3% by weight of an alkaline compound.

12. A coolant brine as claimed in claim 7, which contains 0.03 to 0.1% by weight of nonferrous metal inhibitors.

13. A coolant brine as claimed in claim 8, which contains 0.03 to 0.1% by weight of silicates.

## Revendications

1. Saumures réfrigérantes à base de 20 à 60% en poids d'acétates et/ou de formiates de métaux alcalins inhibés avec une protection améliorée contre la corrosion, caractérisées en ce que, les saumures réfrigérantes contiennent entre 0,2 et 5% en poids de sels de métaux alcalins de l'acide sulfurique.

2. Saumures réfrigérantes selon la revendication 1, caractérisées en ce qu'elles contiennent en supplément des composés alcalins, des inhibiteurs des métaux lourds non ferreux ou des silicates.

3. Saumures réfrigérantes selon la revendication 1, caractérisées en ce qu'elles contiennent en supplément des carbonates de métaux alcalins, des hydroxydes de métaux alcalins, des phosphates de métaux alcalins ou des carbonates de métaux alcalins.

4. Saumures réfrigérantes selon la revendication 1, caractérisées en ce qu'elles contiennent en supplément des triazoles, des imidazoles, des benzotriazoles ou des mercaptobenzothiazoles.

5. Saumures réfrigérantes selon la revendication 1, caractérisées en ce qu'elles contiennent en supplément des silicates.

6. Saumures réfrigérantes selon la revendication 1, caractérisées en ce qu'elles contiennent entre 0,5 et 3% en poids d'un composé alcalin.

7. Saumures réfrigérantes selon la revendication 1, caractérisées en ce qu'elles contiennent entre 0,02 et 0,2% en poids d'inhibiteurs de métaux lourds non ferreux.

8. Saumures réfrigérantes selon la revendication 1, caractérisées en ce qu'elles contiennent jusqu'à 0,3% en poids de silicates.

9. Saumures réfrigérantes selon la revendication 1, caractérisées en ce qu'elles contiennent entre 0,5 et 3% en poids de sels de métaux alcalins de l'acide sulfurique.

10. Saumures réfrigérantes selon la revendication 9, caractérisées en ce qu'elles contiennent entre 1 et 2,5% en poids de sels de métaux alcalins de l'acide sulfurique.

11. Saumures réfrigérantes selon la revendication 6, caractérisées en ce qu'elles contiennent entre 2 et 3% en poids d'un composé alcalin.

12. Saumures réfrigérantes selon la revendication 7, caractérisées en ce qu'elles contiennent entre 0,03 et 0,1% en poids d'inhibiteurs de métaux lourds non ferreux.

13. Saumures réfrigérantes selon la revendication 8, caractérisées en ce qu'elles contiennent entre 0,03 et 0,1% en poids de silicates.
